# EUROPÄISCHE PATENTSCHRIFT

(11) **EP 2 347 231 B1**
(45) Veröffentlichungstag und Bekanntmachung des Hinweises auf die Patenterteilung: **30.10.2019**
(21) Anmeldenummer: 09782103.7
(22) Anmeldetag: 24.08.2009
(51) Int. Cl.: G01H 3/00

(54) **SENSORVORRICHTUNG SOWIE VERFAHREN FÜR DEN BETRIEB EINER SENSORVORRICHTUNG**
SENSOR DEVICE AND METHOD FOR OPERATING A SENSOR DEVICE
DISPOSITIF DÉTECTEUR ET PROCÉDÉ PERMETTANT DE FAIRE FONCTIONNER UN DISPOSITIF DÉTECTEUR

(30) Priorität: 14.10.2008 DE 102008042820
(43) Veröffentlichungstag der Anmeldung: 27.07.2011
(73) Patentinhaber: Robert Bosch GmbH, 70442 Stuttgart (DE)
(72) Erfinder: REICHE, Martin, 71263 Weil Der Stadt (DE); FRANK, Michael, 75015 Bretten (DE); SCHMID, Dirk, 75397 Simmozheim (DE); PREISSLER, Peter, 36460 Dorndorf (DE); RICHTER, Karl-Heinz, 71263 Weil Der Stadt (DE)
(86) Internationale Anmeldenummer: PCT/EP2009/060862
(87) Internationale Veröffentlichungsnummer: WO 2010/043438

(56) Entgegenhaltungen:
- WO-A-2008/141663
- WO-A-2008/157694
- US-A- 6 053 028
- US-A1- 2003 024 298
- J D KEARNS, C L DAVIS, V J MATHEWS: "Sensor Health Diagnostics for Piezoelectric-Based SHM Systems" PROCEEDINGS OF THE SIXTH INTERNATIONAL WORKSHOP ON STRUCTURAL HEALTH MONITORING 2007, 11. September 2007 (2007-09-11), XP008114988

## Beschreibung

Die Erfindung betrifft eine Sensorvorrichtung mit einem Sensor nach dem Oberbegriff des Anspruches 1 und ein Verfahren für den Betrieb der Sensorvorrichtung nach dem Oberbegriff des Anspruches 13.

### Stand der Technik

Eine Sensorvorrichtung zur Abstandsmessung mit einer Funktionsprüfung des Sensors ist beispielsweise aus der Druckschrift DE 10 2005 057 973 A1 bekannt.

Diese Druckschrift offenbart ein Verfahren zur Funktionsprüfung eines Ultraschallsensors an einem Kraftfahrzeug, bei dem in einem Prüfungsbetrieb ein so großes Ultraschallsignal ausgestrahlt wird, dass unter herkömmlichen Bedingungen dieses Ultraschallsignal von einem Boden vor dem Fahrzeug reflektiert und wieder empfangen wird.

Hierbei handelt es sich um eine vergleichsweise "grobe" Überprüfung.

Die Veröffentlichung von J D KEARNS, C L DAVIS, V J MATHEWS: "Sensor Health Diagnostics for Piezoelectric-Based SHM Systems" betrifft eine Sensorvorrichtung mit einem Sensor, welcher Mittel zur Erzeugung und Detektion von Wellen, insbesondere Schallwellen aufweist, wobei die Mittel zur Detektion empfangene Wellen in elektrische Signale umwandeln und die elektrischen Signale mittels einer Auswerteeinheit auswertbar sind, wobei eine Funktionsüberwachungsvorrichtung vorgesehen ist, die dazu ausgelegt ist, eine Impedanzkennlinie des Sensors in Abhängigkeit einer Anregungsfrequenz zu ermitteln. Die Druckschrift US 6 053 028 offenbart die Möglichkeit eines Vergleiches einer Impedanzkennlinie eines nicht gut funktionierenden Hornes mit der Impedanzkennlinie eines gut funktionierenden Hornes.

Die Aufgabenstellung zur vorliegenden Erfindung wird darin gesehen, eine Sensorvorrichtung bereitzustellen, deren Funktionssicherheit weiter verbessert ist.

Die Aufgabe wird durch die Merkmale des Anspruchs 1 bzw. des Anspruchs 10gelöst.

Vorteilhafte Erweiterungen der Erfindung sind in den abhängigen Ansprüchen beschrieben.

### Offenbarung der Erfindung

Die Erfindung geht von einer Sensorvorrichtung mit einem Sensor, insbesondere Ultraschallsensor aus, welcher Mittel zur Erzeugung und Detektion von Wellen, insbesondere Schallwellen aufweist.
Die Mittel zur Detektion wandeln Wellen, insbesondere Schallwellen in elektrische Signale um, wobei die elektrischen Signale von einer Auswerteeinheit auswertbar sind.

Der Kern der Erfindung liegt darin, dass die erfindungsgemäße Sensorvorrichtung eine Funktionsüberwachungsvorrichtung aufweist, welche eine Impedanzkennlinie in Abhängigkeit einer Anregungsfrequenz ermittelt.

Der Erfindung liegt die Erkenntnis zugrunde, dass aus einem Kennlinienverlauf sich zuverlässige Rückschlüsse über die Funktionstüchtigkeit eines Sensors ziehen lassen.
Hierzu können zum Beispiel einzelne Abschnitte der Kennlinie ausgewertet werden.

Allgemein kann die Sende- bzw. Empfangsleistung eines Sensors durch Ablagerung von Materialien, wie beispielsweise Eis, Schnee und/oder Schmutz (Matsch) beeinträchtigt werden.

Ist ein Sensor verschmutzt, so weist dieser aufgrund einer veränderten Masse ein verändertes Schwingverhalten auf.

Darüber hinaus kann eine Funktionsbeeinträchtigung eines Sensors beispielsweise durch Alterung oder Leitungsbruch auftreten.

Über derartige Beeinträchtigungen lässt sich mit den bisher bekannten Sensorvorrichtungen keine zuverlässige Aussage treffen.

Für die Bestimmung einer Impedanz wird bei einem beispielhaften Sensor im Betriebszustand ein Schallumwandler des Sensors über seine zugeordnete Beschaltung mit einer definierten Frequenz zum Schwingen angeregt (Anregungsfrequenz), während gleichzeitig der Spannungspegel am Schallumwandler gemessen wird.

Die Impedanz wird aus dem Quotient von Spannung und Strom berechnet, wobei eine Impedanzkurve über die Anregungsfrequenz einen charakteristischen Verlauf aufweist.

Eine Verschmutzung oder eine Alterung eines Sensors ist durch eine Änderung im Verlauf der zugehörigen Impedanzkennlinie feststellbar.

In einer bevorzugten Ausgestaltung der Erfindung ist es vorgesehen, dass die Funktionsüberwachungsvorrichtung zu einem Vergleich einer vorhandenen Impedanzkennlinie mit einer ermittelten Impedanzkennlinie ausgebildet ist.

Durch einen Vergleich lassen sich Änderungen im Kennlinienverlauf, die insbesondere zu einer Funktionsbeeinträchtigung eines Sensors führen, leicht erkennen.

Zu einem Vergleich kann zum Beispiel eine in der Vorrichtung abgelegte Kennlinie eines einwandfrei funktionierenden Sensors, insbesondere des gleichen Typs herangezogen werden.

Es ist auch denkbar zum Vergleich eine Kennlinie zu benutzen, die sich aus einer Messung des Sensors ergibt, kurz nach der Inbetriebnahme, bei welcher eine einwandfreie Funktion angenommen werden kann.

Im Weiteren ist es bevorzugt, dass die Funktionsüberwachungsvorrichtung beim Vergleich von Impedanzkennlinien in Abhängigkeit von festgestellten Unterschieden oder bei einer Analyse der Impedanzkennlinie ein Überwachungssignal generieren kann.

In diesem Fall ist die Funktionsüberwachungsvorrichtung in der Lage selbst eine Bewertung einer gemessenen Impedanzkennlinie vorzunehmen bzw. eine gemessene Impedanzkennlinie in Bezug zu einer vorhandenen Impedanzkennlinie zu setzen und hieraus Rückschlüsse auf den Sensor zu ziehen.

Dies weist den Vorteil auf, dass ein derart generiertes Überwachungssignal beispielsweise für einen Warnhinweis einer fehlerhaften Funktion des Sensors verwendet werden kann.

Eine Generierung eines Überwachungssignals ist insbesondere dann vorteilhaft, wenn ein zulässiger Verschmutzungsgrad überschritten ist, ein Drahtabriss z.B. am Piezoelement und/oder eine Verminderung des Sende- und Empfangssignals durch Alterung in einem nicht mehr tolerierbaren Ausmaß auftritt.

Es ist auch denkbar, dass die Funktionsüberwachungsvorrichtung eine erfasste Kennlinie nicht selbst auswertet, sondern an eine Steuereinheit zur Auswertung weiterleitet.
In dieser kann zum Beispiel auch ein Vergleich mit einer vorhandenen Impedanzkennlinie vorgenommen werden.

Eine weitere bevorzugte Ausgestaltung der Erfindung sieht vor, dass Speichermittel zur Speicherung von Impedanzwerten vorgesehen sind.

Der Vorteil dieser Speichermittel ist, dass jederzeit auf bereits ermittelte Impedanzwerte zurückgegriffen werden kann, um eine Bewertung über die Funktionstüchtigkeit des entsprechenden Sensors vorzunehmen.

Dabei kann die Erzeugung eines Überwachungssignals mittels einer entsprechenden Steuereinheit ausgeführt werden.

In einem Beispiel, das nicht Bestandteil der Erfindung ist, ist vorgesehen, dass die Funktionsüberwachungsvorrichtung bei der Ermittlung der Impedanzkennlinie dazu ausgebildet ist, eine zu einem normalen Messbetrieb vergleichbare Amplitude anzuregen. Die Anregung zu einer vergleichbaren Amplitude weist den Vorteil auf, dass der normale Messbetrieb ohne Unterbrechung für eine Impedanzmessung ausgeführt werden kann.

Es ist erfindungsgemäss vorgesehen, dass die Funktionsüberwachungsvorrichtung dazu ausgelegt ist, während einer Impedanzmessung eine zu einem normalen Messbetrieb kleinere Amplitude anzuregen.

Durch die Anregung der Funktionsüberwachungsvorrichtung mit einer kleineren Amplitude können störende Frequenzüberlagerungen während des normalen Messbetriebes vermieden werden.

In einem Beispiel, das nicht Bestandteil der Erfindung ist, ist vorgesehen, dass die Funktionsüberwachungsvorrichtung dazu ausgelegt ist ein Messen der Impedanz in vorhandenen Pausen des eigentlichen Messbetriebes des Sensors auszuführen. Dadurch wird der normale Messbetrieb durch die Überwachung nicht beeinträchtigt.

Insbesondere findet dadurch keine Verminderung der gewünschten Messzyklen statt.

Denkbar ist aber auch, dass die Funktionsüberwachungsvorrichtung dazu ausgelegt ist, einzelne Messzyklen des Sensors durch Messzyklen zur Messung der Impedanz zu ersetzen. Häufig stehen hierzu eine ausreichende Anzahl von Messzyklen zur Verfügung.

Im Weiteren ist es bevorzugt, dass der Sensor bzw. das Messsystem so ausgelegt ist, im normalen Messbetrieb mit verschiedenen Frequenzen zu arbeiten, um mittels der Funktionsüberwachungsvorrichtung parallel eine Impedanzkennlinie zu erfassen.

Diese Arbeitsweise der Funktionsüberwachungsvorrichtung weist den Vorteil auf, störende Schallüberlagerungen zu vermeiden und im Hintergrund die Impedanzmessung vornehmen zu können.

Weiterhin ist in einer weiteren Ausgestaltung der Erfindung vorgesehen, dass die Funktionsüberwachungsvorrichtung dazu ausgelegt ist, über entsprechende Algorithmen auf der Grundlage der Impedanzkennlinie, gegebenenfalls einer einzelnen Impedanzkennlinie, Parameter für eine Ersatzschaltung des Sensors zu bestimmen.

Dies weist den Vorteil auf, dass die Parameter einzeln vergleichbar sind und wesentliche Informationen zur Bewertung der Funktionstüchtigkeit eines Sensors liefern können.

Für eine Auswertung der ermittelten Impedanzkennlinie wird mindestens ein Merkmal der Impedanzkennlinie betrachtet, um die elektrischen und akustischen Eigenschaften des Sensors zu bewerten.

Diese Merkmale können absolut, durch Vergleich eines Merkmals mit früheren Messergebnissen eines Sensors oder durch den Vergleich mit Standardwerten für Sensoren einer Baureihe bewertet werden.

Ein weiterer, wesentlicher Aspekt der Erfindung bezieht sich auf ein Verfahren für den Betrieb einer Sensorvorrichtung mit einem Sensor, insbesondere Ultraschallsensor, wobei das Verfahren ausgelegt ist, mittels einer Sensorvorrichtung Wellen zu erzeugen und detektieren, und wobei die empfangenen Wellen in elektrische Signale umgewandelt und in einer Auswerteeinheit ausgewertet werden.

Der Kern des erfindungsgemäßen Verfahrens für den Betrieb einer Sensorvorrichtung liegt darin, dass eine Impedanzkennlinie in Abhängigkeit der Anregungsfrequenz ermittelt wird.

In einer weiteren vorteilhaften Ausgestaltung der Erfindung ist das Verfahren dazu ausgelegt, auf der Grundlage der Impedanzkennlinie Parameter eines elektrischen Ersatzschaltbildes bestimmen zu können.

Durch die Bestimmung eines Ersatzschaltbildes kann eine Bewertung des Sensors anhand von Bauteilparametern des Ersatzschaltbildes vorgenommen werden.

In einer überdies bevorzugten Ausgestaltung des erfindungsgemäßen Verfahrens ist vorgesehen, dass bei der Herstellung der Sensorvorrichtung auf der Grundlage einer bei der Herstellung gemessenen Impedanzkennlinie Parameter für eine Ersatzschaltung des Sensors ermittelt werden und die Parameter mit vorgegebenen Parametern für eine Bewertung der Funktionstüchtigkeit verglichen werden.

Dies weist den Vorteil auf, dass die Ergebnisse der Bewertung für den Fertigungsprozess verwendbar sind und dass notwendige Prüfungen der Sensorvorrichtungen hierdurch eingespart werden können.

Weitere Merkmale der Erfindung gehen aus der nachfolgenden Figurenbeschreibung hervor.

Dabei zeigt:
- Figur 1:: ein Blockschaltbild einer Sensorvorrichtung mit Überwachungsvorrichtung;
- Figur 2:: eine grafische Gegenüberstellung eines Verlaufs der Impedanz über die Frequenz eines beispielhaften Sensors in verschiedenen Benutzungszuständen.

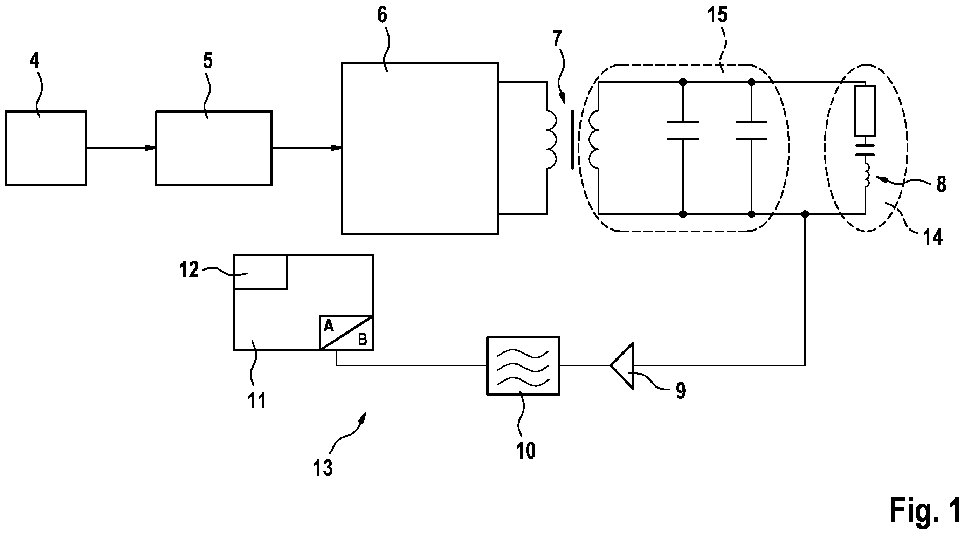

In Figur 1 wird ein Blockschaltbild einer beispielhaften Sensorvorrichtung 13 gezeigt, die mit einer erfindungsgemäßen Funktionsüberwachungsvorrichtung ausgestattet ist.

Dabei umfasst die Schaltung der Sensorvorrichtung 13 einen Oszillator 4 zur Erzeugung einer erforderlichen Frequenz, einen Frequenzteiler 5 zur Generierung unterschiedlicher Frequenzen, eine Brückenendstufe 6, einen Transformator 7 und einen elektroakustischen Schallumwandler 8.
Der elektroakustische Schallumwandler 8 kann in einem Ersatzschaltbild als Serienschwingkreis 14 dargestellt werden, wobei die elektrische Beschaltung als Parallelschwingkreis 15 ausgebildet ist.

Zur Erfassung einer Impedanz wird ein resultierender Spannungspegel am Schallumwandler 8 gemessen. Hierzu wird ein Abgriff im Serienschwingkreis 14 des Schallumwandlers 8 gebildet, wobei der resultierende Spannungspegel mittels eines Verstärkers 9, eines nachgeschalteten Bandpass-Filters 10 und einem nachfolgenden A/D-Wandler im Mikrocontroller 11 ermittelt wird.
Dieses Spannungssignal wird zur Berechnung einer Impedanz verwendet.
Alternativ kann das Spannungssignal an einem Komparator ausgewertet werden.

Die Impedanz wird durch Quotientenbildung einer bekannten Stromstärke und der ermittelten Spannungssignale gebildet, wobei die Impedanzwerte für einen Impedanzkennlinienverlauf 1, 2, 3 verwendet werden können.
Die ermittelten Impedanzwerte zur Bildung von Kennlinien sind im Vergleich mit bereits ermittelten und gespeicherten Impedanzwerten für eine Kennlinie eines funktionstüchtigen Sensors auswertbar.

Durch den Vergleich eines generierten Impedanzverlaufs von beispielsweise eines verschmutzten oder eines durch Alterung beeinträchtigten Sensors mit dem Verlauf einer gespeicherten Referenzkennlinie können Rückschlüsse über die Funktionstüchtigkeit des Sensors gezogen werden, da eine Funktionsbeeinträchtigung eines Sensors durch beispielsweise Schmutz die Sende- bzw. Empfangsleistung des Sensors beeinträchtigt und einen entsprechend abweichenden Impedanzverlauf mit Bezug auf einen Impedanzverlauf eines nicht verschmutzten Sensors zur Folge hat.

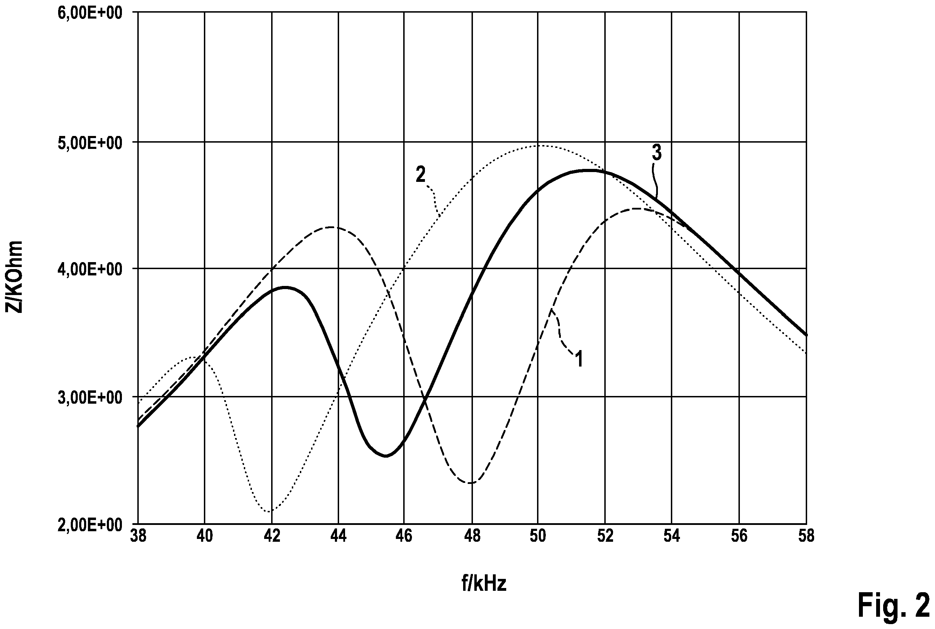

In Figur 2 ist ein Verlauf von unterschiedlichen Impedanzkennlinien 1, 2, 3 einer Sensorvorrichtung 13 gezeigt, wobei eine graphische Darstellung einer Impedanzkennlinie beispielsweise in einem Diagramm ausgeführt wird, in der die X-Achse als Frequenzachse und die Y-Achse als Impedanzachse definiert ist.

Die mit dem Bezugszeichen 1 gezeigte Impedanzkennlinie ergibt sich bei einer üblichen Beschaltung eines Ultraschallsensors, wenn dieser ideal abgestimmt wird. Dabei wird als Beschaltung ein elektroakustischer Schallumwandler 8 angenommen, der im elektrischen Ersatzschaltbild aus einem Parallel- und Serienschwingkreis 14 besteht, welcher mit einem elektrischen Parallelschwingkreis 15 beschaltet wird. Andere Beschaltungen sind jedoch alternativ ebenso möglich.

Hier wird ein Zustand eines Ultraschallsensors aufgezeigt, welcher nicht durch Verschmutzungen oder durch Alterung beeinträchtigt wird.

Zur Bestimmung des Impedanzverlaufs wird bei einem vorgegebenen Strom [I] und bei einer vorgegebenen Frequenz [f] der resultierende Spannungspegel [U] am Schallumwandler 8 gemessen.
Die Messung wird bei verschiedenen Frequenzen, zum Beispiel kontinuierlich steigenden Frequenzen durchgeführt, um daraus eine Impedanzkennlinie über die Frequenz zu erhalten. Die Impedanz ergibt sich dabei durch eine Quotientenbildung von Spannung und Strom.

Die Impedanzkennlinie 1 ist als Referenzkennlinie für den Vergleich mit kontinuierlich erfassten Impedanzkennlinien 2, 3 des Sensors verwendbar.

Mit dem Bezugszeichen 2 wird in Figur 2 eine Impedanzkennlinie gezeigt, wobei die Funktion des Sensors beispielsweise durch eine Verschmutzung beeinträchtigt ist.
Durch eine Verschmutzung wird die Sende- bzw. Empfangsleistung des Sensors derart beeinträchtigt, dass beispielsweise der Kurvenverlauf in einem größeren Bereich von Minimal- und Maximalwerten für die Impedanz in einem tieferen Bereich der Frequenz erfolgt.

Der mit dem Bezugszeichen 3 bezeichnete Verlauf einer Impedanzkennlinie der Figur 2 zeigt beispielhaft einen Sensor, dessen Funktionsbeeinträchtigung auf eine Alterung des Sensors zurückzuführen ist.
Hierbei liegt der Kurvenverlauf der Impedanz zwischen den Impedanzkennlinien 1 für einen Sensor ohne Funktionsbeeinträchtigung und einer Impedanzkennlinie 2 eines Sensors mit Funktionsbeeinträchtigung aufgrund Verschmutzung in einem mittleren Frequenzbereich dieser beiden Impedanzkennlinien 1, 2.

Aus diesem Vergleich einer vorhandenen Impedanzkennlinie 1 mit einer ermittelten Impedanzkennlinie 12 und/oder 3 lassen sich bei einer eventuellen Abweichung Rückschlüsse über beispielsweise den Verschmutzungsgrad oder die Alterung des Sensors ziehen.

Zur Auswertung kann die Lage und Größe von Extremwerten herangezogen werden.

Gemessene und gespeicherte Impedanzwerte sowie eventuelle Vergleichswerte lassen sich beispielsweise für eine Bewertung eines Vergleichs an eine Steuereinheit weiterleiten.

Diese Steuereinheit nimmt dann eine Bewertung der Impedanzwerte vor, wobei beispielsweise eine entsprechende Bewertung zur Generierung einer Reaktion führt, die den Sensor beispielsweise bei einer erkannten Verschmutzung abschaltet und zusätzlich ein Überwachungssignal ausgibt.

## Patentansprüche

1. Sensorvorrichtung mit einem Sensor, insbesondere Ultraschallsensor, welcher Mittel zur Erzeugung und Detektion von Schallwellen aufweist, wobei die Mittel zur Detektion empfangene Schallwellen in elektrische Signale umwandeln und die elektrischen Signale mittels einer Auswerteeinheit auswertbar sind, und eine Funktionsüberwachungsvorrichtung vorgesehen ist, die dazu ausgelegt ist, eine Impedanzkennlinie (1) des Sensors in Abhängigkeit einer Anregungsfrequenz zu ermitteln, **dadurch gekennzeichnet, dass**
die Funktionsüberwachungsvorrichtung ausgelegt ist, den Sensor während einer Impedanzmessung mit einer zu einem normalen Messbetrieb kleineren Amplitude anzuregen.

2. Sensorvorrichtung nach Anspruch 1, **dadurch gekennzeichnet, dass** die Funktionsüberwachungsvorrichtung zu einem Vergleich der ermittelten Impedanzkennlinie (1) mit einer vorhandenen Impedanzkennlinie (1, 2, 3) ausgebildet ist.

3. Sensorvorrichtung nach einem der vorhergehenden Ansprüche 1 bis 2, **dadurch gekennzeichnet, dass** die Funktionsüberwachungsvorrichtung beim Vergleich von Impedanzkennlinien (1, 2, 3) in Abhängigkeit von festgestellten Unterschieden oder bei der Auswertung einer erfassten Impedanzkennlinie (1, 2, 3) ein vorgegebenes Überwachungssignal generieren kann.

4. Sensorvorrichtung nach einem der vorhergehenden Ansprüche 1 bis 3, **dadurch gekennzeichnet, dass** Speichermittel (12) zur Speicherung von Impedanzwerten vorhanden sind.

5. Sensoreinrichtung nach einem der vorhergehenden Ansprüche 1 bis 4, **dadurch gekennzeichnet, dass** die Funktionsüberwachungsvorrichtung ausgebildet ist, über Algorithmen auf der Grundlage der Impedanzkennlinie (1, 2, 3) Parameter für eine Ersatzschaltung des Sensors zu bestimmen.

6. Sensoreinrichtung nach einem der vorhergehenden Ansprüche 1 bis 5, **dadurch gekennzeichnet, dass** in der Funktionsüberwachungsvorrichtung für einen Vergleich Standardwerte von Sensoren vorgegebener Baureihen gespeichert werden.

7. Sensoreinrichtung nach einem der vorhergehenden Ansprüche 1 bis 6, **dadurch gekennzeichnet, dass** die Funktionsüberwachungsvorrichtung für einen Vergleich Messwerte der jeweiligen Sensoren heranholt.

8. Sensorvorrichtung nach einem der vorhergehenden Ansprüche 1 bis 7, **dadurch gekennzeichnet, dass** die Funktionsüberwachungsvorrichtung dazu ausgelegt ist, einzelne Messzyklen des Sensors durch Messzyklen zur Messung der Impedanz zu ersetzen.

9. Sensoreinrichtung nach einem der vorhergehenden Ansprüche 1 bis 8, **dadurch gekennzeichnet, dass** die Funktionsüberwachungsvorrichtung ausgelegt ist, im normalen Messbetrieb mit verschiedenen Frequenzen zu arbeiten, um parallel eine Impedanzkennlinie (1, 2, 3) erfassen zu können.

10. Verfahren für den Betrieb einer Sensorvorrichtung nach einem der Ansprüche 1 bis 9, bei welchem mit einem Sensor Schallwellen erzeugt und detektiert werden, wobei die zur Detektion empfangenen Schallwellen in elektrische Signale umgewandelt und die elektrischen Signale in einer Auswerteeinheit ausgewertet werden, und eine Impedanzkennlinie (1, 2, 3) des Sensors in Abhängigkeit einer Anregungsfrequenz ermittelt wird, **dadurch gekennzeichnet, dass**
die Funktionsüberwachungsvorrichtung, den Sensor während einer Impedanzmessung mit einer zu einem normalen Messbetrieb kleineren Amplitude anregt.

11. Verfahren nach Anspruch 10, **dadurch gekennzeichnet, dass** die aktuell gemessene Impedanzkennlinie (2, 3) mit einer vorhandenen Impedanzkennlinie (1) des Sensors verglichen wird und in Abhängigkeit von festgestellten Unterschieden beim Vergleich der Impedanzkennlinien (1, 2, 3) ein vorgegebenes Überwachungssignal ausgegeben wird.

12. Verfahren nach Anspruch 11, **dadurch gekennzeichnet, dass** auf der Grundlage der Impedanzkennlinie (1, 2, 3) Parameter für eine Ersatzschaltung des Sensors ermittelt werden.

13. Verfahren nach Anspruch 12, **dadurch gekennzeichnet, dass** bei der Herstellung der Sensorvorrichtung auf der Grundlage einer, bei der Herstellung gemessenen Impedanzkennlinie (1, 2, 3), Parameter für eine Ersatzschaltung des Sensors ermittelt werden und die Parameter mit vorgegebenen Parametern für eine Bewertung der Funktionstüchtigkeit verglichen werden.

## Claims

1. Sensor apparatus having a sensor, in particular ultrasonic sensor, which has means for generating and detecting sound waves, wherein the means for detection convert received sound waves to electrical signals and the electrical signals are able to be evaluated by means of an evaluation unit, and a function monitoring apparatus is provided, which is designed to ascertain an impedance characteristic curve (1) of the sensor as a function of an excitation frequency, **characterized in that** the function monitoring apparatus is designed to excite the sensor during an impedance measurement by way of an amplitude that is lower with respect to a normal measurement operation.

2. Sensor apparatus according to Claim 1, **characterized in that** the function monitoring apparatus is designed to compare the ascertained impedance characteristic curve (1) with a present impedance characteristic curve (1, 2, 3) .

3. Sensor apparatus according to one of the preceding Claims 1 to 2, **characterized in that** the function monitoring apparatus can generate a prescribed monitoring signal during the comparison of impedance characteristic curves (1, 2, 3) depending on determined differences or during the evaluation of a detected impedance characteristic curve (1, 2, 3).

4. Sensor apparatus according to one of the preceding Claims 1 to 3, **characterized in that** storage means (12) for storing impedance values are present.

5. Sensor device according to one of the preceding Claims 1 to 4, **characterized in that** the function monitoring apparatus is designed to determine parameters for an equivalent circuit of the sensor by means of algorithms based on the impedance characteristic curve (1, 2, 3).

6. Sensor device according to one of the preceding Claims 1 to 5, **characterized in that** standard values of sensors of prescribed series are stored in the function monitoring apparatus for comparison.

7. Sensor device according to one of the preceding Claims 1 to 6, **characterized in that** the function monitoring apparatus fetches measurement values of the respective sensors for comparison.

8. Sensor apparatus according to one of the preceding Claims 1 to 7, **characterized in that** the function monitoring apparatus is designed to replace individual measurement cycles of the sensor with measurement cycles for measuring the impedance.

9. Sensor device according to one of the preceding Claims 1 to 8, **characterized in that** the function measuring apparatus is designed to operate at various frequencies during normal measurement operation in order to be able to detect an impedance characteristic curve (1, 2, 3) in parallel.

10. Method for operating a sensor apparatus according to one of Claims 1 to 9, in which sound waves are generated and detected by way of a sensor, wherein the sound waves received for detection are converted to electrical signals and the electrical signals are evaluated in an evaluation unit, and an impedance characteristic curve (1, 2, 3) of the sensor is ascertained as a function of an excitation frequency, **characterized in that** the function monitoring apparatus excites the sensor during an impedance measurement by way of an amplitude that is lower with respect to a normal measurement operation.

11. Method according to Claim 10, **characterized in that** the currently measured impedance characteristic curve (2, 3) is compared with a present impedance characteristic curve (1) of the sensor and a prescribed monitoring signal is output depending on determined differences during the comparison of the impedance characteristic curves (1, 2, 3).

12. Method according to Claim 11, **characterized in that** parameters for an equivalent circuit of the sensor are ascertained based on the impedance characteristic curve (1, 2, 3).

13. Method according to Claim 12, **characterized in that**, during the production of the sensor apparatus, parameters for an equivalent circuit of the sensor are ascertained based on an impedance characteristic curve (1, 2, 3) measured during the production and the parameters are compared with prescribed parameters for an evaluation of the functionality.

## Revendications

1. Dispositif détecteur avec un détecteur, en particulier un détecteur à ultrasons, qui présente des moyens de production et de détection d'ondes sonores, dans lequel les moyens de détection convertissent des ondes sonores reçues en signaux électriques et les signaux électriques peuvent être évalués au moyen d'une unité d'évaluation, et il est prévu un dispositif de surveillance du fonctionnement, qui est conçu pour déterminer une courbe caractéristique d'impédance (1) du détecteur en fonction d'une fréquence d'excitation, **caractérisé en ce que** le dispositif de surveillance du fonctionnement est conçu pour exciter le détecteur pendant une mesure d'impédance avec une amplitude plus petite que lors d'un fonctionnement de mesure normal.

2. Dispositif détecteur selon la revendication 1, **caractérisé en ce que** le dispositif de surveillance du fonctionnement est configuré pour une comparaison de la courbe caractéristique d'impédance déterminée (1) avec une courbe caractéristique d'impédance présente (1, 2, 3) .

3. Dispositif détecteur selon l'une des revendications précédentes 1 et 2, **caractérisé en ce que** le dispositif de surveillance du fonctionnement peut générer un signal de surveillance prédéterminé lors de la comparaison de courbes caractéristiques d'impédance (1, 2, 3) en fonction de différences constatées ou lors de l'évaluation d'une courbe caractéristique d'impédance détectée (1, 2, 3).

4. Dispositif détecteur selon l'une quelconque des revendications précédentes 1 à 3, **caractérisé en ce qu'**il se trouve des moyens de mémoire (12) pour mémoriser des valeurs d'impédance.

5. Dispositif détecteur selon l'une quelconque des revendications précédentes 1 à 4, **caractérisé en ce que** le dispositif de surveillance du fonctionnement est configuré pour déterminer des paramètres pour un circuit de remplacement du détecteur au moyen d'algorithmes sur la base de la courbe caractéristique d'impédance (1, 2, 3) .

6. Dispositif détecteur selon l'une quelconque des revendications précédentes 1 à 5, **caractérisé en ce que** l'on mémorise dans le dispositif de surveillance du fonctionnement en vue d'une comparaison des valeurs standard de détecteurs de séries de construction prédéterminées.

7. Dispositif détecteur selon l'une quelconque des revendications précédentes 1 à 6, **caractérisé en ce que** le dispositif de surveillance du fonctionnement va chercher des valeurs de mesure des détecteurs respectifs en vue d'une comparaison.

8. Dispositif détecteur selon l'une quelconque des revendications précédentes 1 à 7, **caractérisé en ce que** le dispositif de surveillance du fonctionnement est conçu pour remplacer des cycles de mesure isolés du détecteur par des cycles de mesure pour la mesure de l'impédance.

9. Dispositif détecteur selon l'une quelconque des revendications précédentes 1 à 8, **caractérisé en ce que** le dispositif de surveillance du fonctionnement est conçu pour opérer en fonctionnement de mesure normal avec des fréquences différentes, afin de pouvoir détecter en parallèle une courbe caractéristique d'impédance (1, 2, 3) .

10. Procédé pour faire fonctionner un dispositif détecteur selon l'une quelconque des revendications précédentes 1 à 9, dans lequel on produit et on détecte des ondes sonores avec un détecteur, dans lequel on convertit les ondes sonores reçues pour la détection en signaux électriques et on évalue les signaux électriques dans une unité d'évaluation, et on détermine une courbe caractéristique d'impédance (1, 2, 3) du détecteur en fonction d'une fréquence d'excitation, **caractérisé en ce que** le dispositif de surveillance du fonctionnement excite le détecteur pendant une mesure d'impédance avec une amplitude plus petite que lors d'un fonctionnement de mesure normal.

11. Procédé selon la revendication 10, **caractérisé en ce que** l'on compare la courbe caractéristique d'impédance actuellement mesurée (2, 3) avec une courbe caractéristique d'impédance présente (1) du détecteur et, en fonction de différences constatées lors de la comparaison des courbes caractéristiques d'impédance (1, 2, 3), on émet un signal de surveillance prédéterminé.

12. Procédé selon la revendication 11, **caractérisé en ce que** l'on détermine sur la base de la courbe caractéristique d'impédance (1, 2, 3) des paramètres pour un circuit de remplacement du détecteur.

13. Procédé selon la revendication 12, **caractérisé en ce que** l'on détermine, lors de la fabrication du dispositif détecteur, sur la base d'une courbe caractéristique d'impédance (1, 2, 3) mesurée lors de la fabrication, des paramètres pour un circuit de remplacement du détecteur, et on compare les paramètres avec des paramètres prédéterminés en vue d'une évaluation de l'efficacité de fonctionnement.
